# EUROPÄISCHE PATENTSCHRIFT

(11) **EP 2 063 155 B1**
(45) Veröffentlichungstag und Bekanntmachung des Hinweises auf die Patenterteilung: **16.01.2013**
(21) Anmeldenummer: 08019678.5
(22) Anmeldetag: 11.11.2008
(51) Int. Cl.: F16J 15/34

(54) **Vorrichtung zur Drehsicherung eines axial beweglich an einem Montagebauteil gehaltenen Gleitringes einer Gleitringdichtungsanordnung**
Device for rotary protection of an axially moving slip-ring held on an assembly component of a mechanical seal arrangement
Dispositif destiné à la sécurité contre la rotation d'une bague glissante d'un arrangement de bague d'étanchéité glissante, maintenue de façon axialement mobile sur un composant de montage

(30) Priorität: 23.11.2007 DE 202007016406 U
(43) Veröffentlichungstag der Anmeldung: 27.05.2009
(73) Patentinhaber: EagleBurgmann Germany GmbH & Co. KG, 82515 Wolfratshausen (DE)
(72) Erfinder: Dröscher, Peter, 82538 Geretsried-Gelting (DE); Laxander, Armin, 82067 Ebenhausen (DE); Lederer, Günther, 82538 Geretsried (DE); Philippi, Petia, 82515 Wolfratshausen (DE); Schrüfer, Andreas, 82515 Wolfratshausen (DE)
(74) Vertreter: Schaeberle, Steffen

(56) Entgegenhaltungen:
- EP-A- 0 591 586
- US-A- 2 996 319
- US-A- 6 076 830

## Beschreibung

Die Erfindung betrifft eine Vorrichtung zur Drehsicherung eines axial beweglich an einem Montagebauteil gehaltenen Gleitringes einer Gleitringdichtungsanordnung und insbesondere eine solche mit einem am Montagebauteil axial beweglich gehaltenen Kraftübertragungsring und mit einer Drehverhinderungseinrichtung mit wenigstens einem mit dem Montagebauteil und dem Kraftübertragungsring formschlüssig in Eingriff bringbaren ersten Mitnehmerelement und wenigstens einem mit dem Kraftübertragungsring und dem Gleitring formschlüsig in Eingriff bringbaren zweiten Mitnehmerelement, wobei das erste gegenüber dem zweiten Mitnehmerelement umfänglich versetzt angeordnet ist. Eine derartige Anordnung ist grundsätzlich aus der US 3 479 039 A bekannt.

Bei der bekannten Anordnung greifen radial vom Kraftübertragungsring abstehende Laschen einerseits in Nuten im Gleitring und andererseits in Nuten im Montagebauteil ein, um ein auf den Gleitring wirkendes Drehmoment auf das Gehäuse zu übertragen und dadurch den Gleitring an einer Drehung relativ zum Gehäuse zu hindern. Die axiale Beweglichkeit des Kraftübertragungsringes ist bei dieser Anordnung eingeschränkt, und ausserdem erfordert die Anordnung einen erheblichen Aufwand bei der Montage und Wartung. Darüber hinaus ist die Funktion des Kraftübertragungsringes naturgemäss nur auf die Weiterleitung der Vorspannkraft auf den Gleitring eingeschränkt. Bekannt sind auch ähnliche durch Formschluss wirkende drehsichernde Massnahmen in Gestalt von radialen Mitnehmerstiften, die in axiale Nuten im Umfang des Gleitringe eingreifen. Ein gemeinsames Merkmale der bekannten Anordnungen ist eine relativ deutliche Schwächung des Gleitringes durch die vorzusehenden Nuten oder Mitnehmerelemente. Ferner kann die Beweglichkeit des Gleitringes in axialer Richtung sowohl der Wegstrecke nach als durch Reibungseffekte eingeschränkt bzw. beeinträchtigt sein.

Die Dokumente US 6 076 830, EP 0 591 586 und US 2 996 319 offenbaren Vorrichtungen zur Drehsicherung eines axial beweglich an einem Montagebauteil gehaltenen Gleitringes einer Gleitringdichtungsanordnung.

Der Erfindung liegt demzufolge die Aufgabe zugrunde, eine drehsichernde Vorrichtung der gattungsgemässen Art zu schaffen, die eine Minimierung der Baulänge der Gleitringdichtungsanordnung bei gleichzeitig minimaler Querschnittsschwächung des Gleitringes ermöglicht. Ausserdem soll die Vorrichtung mit minimalem Montage- und Wartungsaufwand verbunden sein und eine funktionelle Erweiterung der Funktion des Kraftübertragungsringes ermöglichen.

Diese Aufgabe wird durch die Merkmale des Anspruches 1 gelöst.

Ein Merkmal der Erfindung ist, dass die Mitnehmerelemente, anders als bei den bekannten Anordnungen, nicht radial, sondern sich axial erstrecken. Die Drehmomentübertragung vom Gleitring auf das Montagebauteil (z.B. Gehäuse) erfolgt in zwei Schritten, indem das Drehmoment zunächst vom Gleitring auf den Kraftübertragungsring und dann vom Kraftübertragungsring an einer umfänglich versetzt angeordneten Stelle auf das Gehäuse übertragen wird. Die axial sich erstreckenden Mitnehmerelemente greifen in Bohrungen bzw. Ausnehmungen mit geringer Tiefe im Kraftübertragungsring bzw. Gleitring ein, wodurch der Gleitring nur unwesentlich geschwächt wird und dabei am Gleitring für die Drehsicherung einfache bauliche Massnahmen ausreichen. Durch die Erfindung wird eine erhebliche Reduzierung der Baulänge der Gleitringdichtungsanordnung ermöglicht, ohne dass die Beweglichkeit des Gleitringes in axialer Richtung mit Einschränkungen verbunden ist. Hinzu kommt, dass der freibewegliche Kraftübertragungsring wegen fehlender radialer Mitnehmerlaschen oder dgl. die weitere Funktion der Aufnahme einer Nebendichtungsanordnung zur Abdichtung des Gleitringes gegenüber dem Montagebauteil übernehmen kann. Gemäss einer bevorzugten Weiterbildung der Erfindung ist daher wenigstens ein ringförmiges Dichtungselement aus einem elastischen Material vom Kraftübertragungsring nahe dessen dem Gleitring zugewandten Endfläche vorgesehen: Dabei kann das Dichtungselement in dichtendem Eingriff mit einer Führungsfläche des Montagebauteiles treten, längs der der Kraftübertragungsring axial geführt ist. Durch diese Massnahmen wird weiter bewirkt, dass am Gleitring selbst keine querschnittsschwächende Nuten zur Aufnahme von Nebendichtungselementen, wie O-Ringe, eingebracht werden brauchen, wodurch die Beweglichkeit des Gleitringes ebenfalls gefördert wird.

Bezüglich anderer Weiterbildungen der Erfindung wird auf die Ansprüche verwiesen.

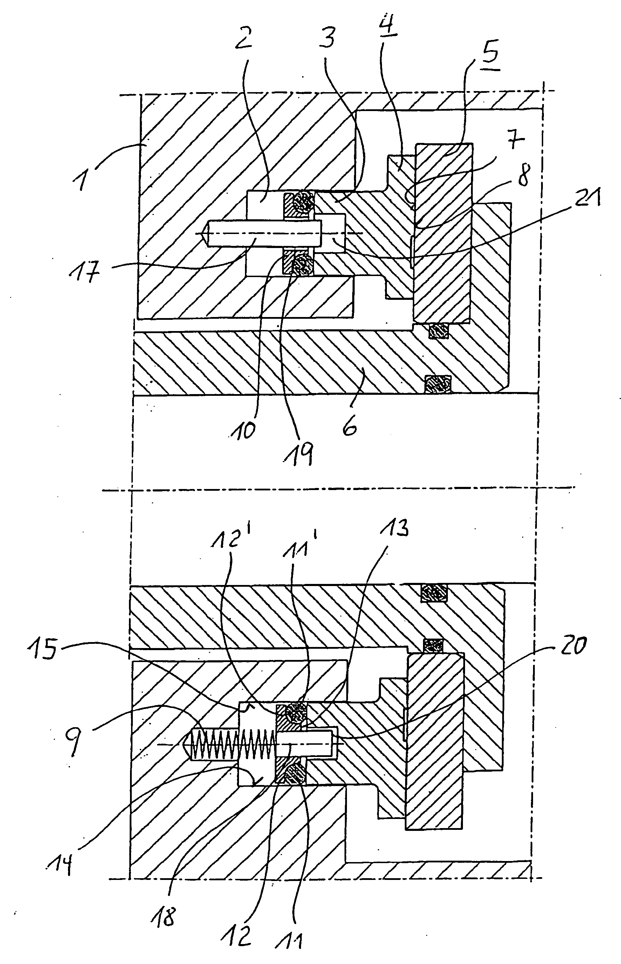

Die Erfindung wird nachfolgend anhand der Zeichnung, die in längsgeschnittener, teilweise vereinfachter Ansicht eine bevorzugte Ausführungsform einer erfindungsgemässen Drehverhinderungsvorrichtung zeigt, näher erläutert.

In der Zeichnung ist mit dem Bezugszeichen 1 ein stationäres Bauteil, insbesondere das Gehäuse einer Gleitringdichtungsanordnung bezeichnet und mit dem Bezugszeichen 2 ein axial in das Gehäuse eingebrachter Führungsringraum oder eine ringförmige Ausnehmung mit einem endseitigen offenen Ende, in das ein axialer Ansatzbereich 3 eines drehfesten, jedoch axial beweglichen Gleitringes 4 hineinragt, so dass der Gleitring 4 im Führungsringraum 2 gehalten und axial geführt ist.

Der drehfeste Gleitring 4 wirkt mit einem Gleit- oder Gegenring 5 zusammen, der zur gemeinsamen Drehung auf einer Buchse 6 montiert ist, die auf einem rotierenden Bauteil (Welle) zur gemeinsamen Drehung damit aufgesetzt und montiert werden kann. Bei einer Drehung des rotierenden Bauteils wird daher der Gleitring 5 zu einer ebensolchen Drehung veranlasst, während der Gleitring 4 durch nachfolgend näher beschriebene Mittel drehfest in Bezug auf das Gehäuse 1 gehalten ist.

Die Gleitringe 4, 5 haben gegenüberliegende Gleit- oder Dichtflächen 7 bzw. 8, zwischen denen bei Betrieb ein Dichtspalt gebildet wird, um die Umgebung an einem Umfang gegenüber der Umgebung am anderen Umfang der Gleitringpaarung abzudichten. Bei Stillstand der Gleitringdichtungsanordnung werden die Gleitflächen 7, 8 unter einer Vorspannkraft in dichtendem Eingriff miteinander gehalten. Dazu ist eine Vorspanneinrichtung 9 vorgesehen, bei der es sich um eine oder mehrere umfänglich des Führungsringraums 2 verteilt angeordnete Vorspannfedern handeln kann.

Die Vorspannkraft der Vorspanneinrichtung 9 wirkt auf den Gleitring 4 nicht unmittelbar, sondern über einen Kraftübertragungsring 10, der im Führungsringraum 2 axial beweglich angeordnet ist. Die Vorspanneinrichtung 9 ist mit einem axialen Ende am Kraftübertragungsring 10 und am anderen axialen Ende am Gehäuse 1 abgestützt. Unter der Wirkung der Vorspannkraft erfährt der Kraftübertragungsring 10 eine axiale Bewegung im Führungsringraum 2 in Richtung auf die benachbarte Stirnseite des Gleitringes 4, so dass auf diesen die Vorspannkraft übertragen wird.

Der Kraftübertragungsring 10 kann ein Paar Dichtungselemente 11, 11' aus einem elastischen Material wie einem Elastomermaterial aufweisen, um den Gleitring 4 gegenüber dem Gehäuse 1 abzudichten. Vorzugsweise handelt es sich bei den Dichtungselementen 11, 11' um handelsüblich erhältliche O-Ringe, die in umfänglich sich erstreckenden Aussparungen 12, 12' mit einem an die Querschnittkonfiguration der Dichtungselemente 11, 11' angepassten, z.B. teilkreisförmigem Querschnitt im Eckbereich zwischen dem äusseren bzw. inneren Umfang und einer dem Gleitring 4 zugewandten Endfläche 13 des Kraftübertragungsringes 10 so angeordnet sind, dass der Querschnitt jedes Dichtungselementes 11, 11' die Endfläche 13 um ein geeignetes geringes Mass axial überragt. Vorzugsweise überragen die Dichtungselemente 11, 11' auch den äusseren bzw. inneren Umfang des Kraftübertragungsringes 10 um ein geringes Mass.

Die Dichtungselemente 11, 11' können mit benachbarten inneren bzw. äusseren Umfangsflächen 14, 15 des Führungsringraumes 2 in Eingriff treten, wenn die Dichtungselemente 11, 11' infolge einer darauf ausgeübten Axialkraft eine radiale Ausdehnung erfahren. Ohne diese Axialkraft liegt dagegen keine oder eine nur vernachlässigbar geringe Eingriffnahme der Dichtungselemente 11, 11' mit den Umfangsflächen 14, 15 vor, so dass unter diesen Umständen die axiale Beweglichkeit des Kraftübertragungsringes 10 nicht beeinträchtigt ist.

Erfindungsgemäss ist eine Drehsicherungseinrichtung vorgesehen, um den Gleitring 4 drehfest in Bezug auf das Gehäuse 1 zu halten, ohne dass dadurch die axiale Beweglichkeit der Teile eingeschränkt wird. Die erfindungsgemässe Drehsicherungseinrichtung umfasst erste und zweite Mitnehmerelemente 17, 18, die den Kraftübertragungsring 10 an einer Drehung relativ zum Gehäuse 1 bzw. den Gleitring 4 an einer Drehung relativ zum Kraftübertragungsring 10 hindern. Wie dargestellt ist, kann das erste Mitnehmerelement 17 ein zylinderförmiges Element sein, das axial in den Führungsinnenraum 2 über eine geeignete axiale Erstreckungslänge ragt und in einer Sacklochbohrung des Gehäuses 1 fest, z.B. durch Presssitz gehalten ist.

Im Kraftübertragungsring 10 ist eine Ausnehmung oder Bohrung 19 in axialer Ausrichtung zum Mitnehmerelement 17 vorgesehen, in die sich das Mitnehmerelement 17 bei einer axialen Bewegung des Kraftübertragungsringes 10 hinein erstrecken kann, wobei das Mitnehmerelement 17 mit Spiel in der Ausnehmung 19 aufgenommen werden kann, wie dies in der Zeichnung im oberen Abschnitt der Figur gezeigt ist.

Beim zweiten Mitnehmerelement 18 kann es sich ebenfalls um ein zylinderförmiges Element handeln, das in einer Passbohrung im Kraftübertragungsring 10 mit Festsitz gehalten ist und axial vom Kraftübertragungsring 10 in Richtung auf den Gleitring 4 über eine geeignete axiale Erstreckungslänge absteht, die jedoch kürzer als die axiale Erstreckungsklänge des ersten Mitnehmenelementes 17 sein sollte.

Im Gleitring 4 ist eine zum zweiten Mitnehmerelement 18 ausgerichtete Ausnehmung 20 vorgesehen, in der das zweite Mitnehmerelement 18 bei einer entsprechenden Lagebeziehung zwischen dem Kraftübertragungsring 10 und dem Gleitring 4 mit Spiel aufgenommen werden kann, wie dies im unteren Abschnitt der Figur gezeigt ist.

Wie ferner im oberen Abschnitt der Figur zu sehen ist, kann im Gleitring 4 eine zum ersten Mitnehmerelement 17 ausgerichtete weitere Ausnehmung 21 vorgesehen sein, in der ein Endbereich des ersten Mitnehmerelementes 17 hineinragen kann, wenn das erste Mitnehmerelement 17 über die dem Gleitring 4 zugewandte Endfläche 13 des Kraftübertragungsringes 10 hinausragt, was der Fall sein kann, wenn die Teile die im oberen Abschnitt der Figur gezeigte gegenseitige Position einnehmen. Das erste Mitnehmerelement 17 sollte in der Ausnehmung 21 des Gleitringes 4 mit grösserem Spiel aufgenommen werden, als dies beim zweiten Mitnehmerelement 18 in Bezug auf die Ausnehmung 20 des Gleitringes 4 der Fall ist. Durch diese Massnahme wird eine eventuelle starre verkantete Positionierung des Gleitringes 4 in Bezug auf den Kraftübertragungsring 10 vermieden. Beide im Gleitring 4 seitens dessen dem Kraftübertragungsring 10 zugewandten Stirnseite eingebrachten Ausnehmung 20, 21 können aufgrund der erfindungsgemässen Ausbildung der Drehsicherung eine minimale Tiefe aufweisen, so dass der Gleitring 4 dadurch nicht oder nur unwesentlich geschwächt wird.

Vorzugsweise sind eine Vielzahl umfänglich verteilt angeordnete erste Mitnehmerelemente 17 und eine ebensolche oder unterschiedliche Vielzahl verteilt angeordnete zweite Mitnehmerelemente 18 vorgesehen, wobei die ersten und zweiten Mitnehmerelemente 17, 18 an umfänglich versetzt zueinander liegenden Stellen vorgesehen sind. Die Ausnehmungen 19 bzw, 20 und 21 im Kraftübertragungsring 10 bzw. Gleitring 4 sind in entsprechender Weise ausgerichtet zu den jeweiligen Mitnehmerelementen 17, 18 im betreffenden Bauteil vorgesehen.

Obschon bei der vorbeschriebenen Ausführungsform die Drehsicherung des Gleitringes 4 in Bezug auf ein stationäres Gehäuse 1 beschrieben wurde, kann, wenn erwünscht, eine erfindungsgemässe Drehsicherung auch beim rotierenden Gleitring 5 vorgesehen sein, wenn es erwünscht ist, dass dieser zusätzlich zur Drehung axial in Bezug auf das drehende Bauteil (Welle) bewegbar gehalten sein soll.

## Patentansprüche

1. Vorrichtung zur Drehsicherung eines axial beweglich an einem Montagebauteil (1) gehaltenen Gleitringes (4) einer Gleitringdichtungsanordnung, mit einem am Montagebauteil axial beweglich gehaltenen Kraftübertragungsring (10) und mit einer Drehverhinderungseinrichtung mit wenigstens einem mit dem Montagebauteil und dem Kraftübertragungsring formschlüssig in Eingriff bringbaren ersten Mitnehmerelement (17) und wenigstens einem mit dem Kraftübertragungsring und dem Gleitring formschlüssig in Eingriff bringbaren zweiten Mitnehmerelement (18), wobei das zweite Mitnehmerelement (18) axial vom Kraftübertragungsring (10) in Richtung auf den Gleitring (4) absteht und in eine im Gleitring (4) vorgesehene axiale Ausnehmung (20) mit Spiel aufnehmbar isund wobei das erste gegenüber dem zweiten Mitnehmerelement umfänglich versetzt angeordnet ist,
**dadurch gekennzeichnet, dass**
- das erste Mitnehmerelement (17) axia von dem Montagebanleil (1) in Richtung auf den Kraftübertragungsring (10) absteht und gleichzeitig in zueinander ausgerichteten Ausnehmungen (19,21) im Kraftübertragungsring (10) und Gleitring (4) aufnehmbar ist, die wobei im kraftübertragungsring vorgesehene axiale Ausnehmung (19) mit Spiel ist.

2. Vorrichtung nach Anspruch 1, **dadurch gekennzeichnet, dass** eine Vielzahl umfänglich zueinander versetzte erste (17) und eine Vielzahl umfänglich zueinander und zu den ersten Mitnehmerelementen versetzte zweite Mitnehmerelemente (18) vorgesehen sind, denen eine entsprechende Vielzahl an axialen Ausnehmungen (19,20) im Kraftübertragungsring (10) und Gleitring (4) zugeordnet ist, wobei die ersten Mitnehmerelemente (17) gleichzeitig in zueinander ausgerichtete Ausnehmungen (20,21) im Kraftübertragungsring und Gleitring aufnehmbar sind.

3. Vorrichtung nach einem der vorhergehenden Ansprüche, **dadurch gekennzeichnet, dass** jedes erste und zweite Mitnehmerelement (17,18) zylinderförmig ausgebildet ist und durch Presssitz im Kraftübertragungsring (10) oder im Montagebauteil (1) gehalten ist.

4. Vorrichtung nach einem der vorhergehenden Ansprüche, **dadurch gekennzeichnet, dass** wenigstens ein ringförmiges Dichtungselement (11) aus einem elastischen Material am Kraftübertragungsring (10) nahe dessen dem Gleitring (4) zugewandten Endfläche (13) vorgesehen ist, wobei das Dichtungselement in dichtendem Eingriff mit einer Führungsfläche (14,15) des Montagebauteils (1) bringbar ist, längs welcher der Kraftübertragungsring axial geführt ist.

5. Vorrichtung nach einem der vorhergehenden Ansprüche, **gekennzeichnet durch** eine zwischen dem Montagebauteil (1) und dem Kraftübertragungsring (10) wirkende Vorspanneinrichtung (9), um den Kraftübertragungsring axial gegen den Gleitring (4) vorzuspannen.

6. Vorrichtung nach einem der vorhergehenden Ansprüche, **dadurch gekennzeichnet, dass** das Montagebauteil (1) einen Führungsringraum (2) umfasst, in welchem der Kraftübertragungsring (10) und wenigstens ein Bereich des Gleitringes (4) axial beweglich aufgenommen sind.

7. Vorrichtung nach einem der vorhergehenden Ansprüche, **dadurch gekennzeichnet, dass** das Montagebauteil ein stationäres Gehäuse (1) umfasst.

## Claims

1. An apparatus for rotationally fixing a seal ring (4) of a mechanical seal assembly retained at a mounting component (1) to be axially movable, comprising a force transmitting ring (10) retained at the mounting component to be axially movable and a rotation prevention device comprising at least one first engaging member (17) configured to engage with the mounting component and the force transmitting ring in a form-fit manner and at least one second engaging member (18) configured to engage with the force transmitting ring and the seal ring in a form-fit manner, the second engaging member (18) protruding axially from the force transmitting ring (10) towards the seal ring (4) and being configured to be received in an axial recess (20) provided in the seal ring (4) with a play, and the first engaging member being arranged circumferentially offset with respect to the second engaging member, **characterized in that** the first engaging member (17) protrudes axially from the mounting component (1) towards the force transmitting ring (10) and is configured to be received simultaneously in mutually aligned recesses (19, 21) in the force transmitting ring (10) and seal ring (4) and is received in the axial recess (19) provided in the force transmitting ring with a play.

2. The apparatus of claim 1, **characterized in that** a plurality of mutually circumferentially offset first (17) engaging members and a plurality of mutually circumferentially offset second engaging members (18) offset with respect to the first engaging members are provided, to which a corresponding plurality of axial recesses (19, 20) in the force transmitting ring (10) and the seal ring (4) are assigned, wherein the first engaging members (17) are configured to be received simultaneously in mutually aligned recesses (20, 21) in the force transmitting ring and the seal ring.

3. The apparatus of any of the preceding claims, **characterized in that** each first and second engaging member (17, 18) is formed cylindrically and is retained in the force transmitting ring (10) or the mounting component (1) by press-fit.

4. The apparatus of any of the preceding claims, **characterized in that** at least one annular sealing member (11) made of an elastic material is provided at the force transmitting ring (10) near its end face (13) facing the seal ring (4), wherein the sealing member is configured to sealingly engage with a guiding surface (14, 15) of the mounting component (1), along which surface the force transmitting ring is axially guided.

5. The apparatus of any of the preceding claims, **characterized by** a biasing device (9) effective between the mounting component (1) and the force transmitting ring (10), to bias the force transmitting ring axially against the seal ring (4).

6. The apparatus of any of the preceding claims, **characterized in that** the mounting component (1) comprises a guiding ring space (2) in which the force transmitting ring (10) and at least a portion of the seal ring (4) is received to be axially movable.

7. The apparatus of any of the preceding claims, **characterized in that** the mounting component comprises a stationary housing (1).

## Revendications

1. Dispositif servant à bloquer toute rotation d'une bague glissante (4) d'un ensemble d'étanchéité à bagues glissantes maintenue de manière mobile axialement sur un composant de montage (1), comportant une bague de transmission de force (10) maintenue de manière mobile axialement sur le composant de montage et comportant un dispositif servant à empêcher toute rotation doté d'au moins un premier élément entraîneur (17) pouvant être amené en prise par complémentarité de forme avec le composant de montage et la bague de transmission de force et d'au moins un deuxième élément entraîneur (18) pouvant être amené en prise par complémentarité de forme avec la bague de transmission de force et la bague glissante,
sachant que le deuxième élément entraîneur (18) fait saillie axialement de la bague de transmission de force (10) dans la direction de la bague glissante (4) et peut être reçu avec du jeu dans un évidement (20) axial prévu dans la bague glissante (4), et sachant que le premier élément entraîneur est disposé de manière décalée sur le pourtour par rapport au deuxième élément entraîneur,
**caractérisé en ce que**
le premier élément entraîneur (17) fait saillie axialement du composant de montage (1) dans la direction de la bague de transmission de force (10) et peut être de manière simultanée reçu dans des évidements (19, 21) orientés les uns par rapport aux autres, dans la bague de transmission de force (10) et la bague glissante (4) et est logé dans l'évidement (19) axial prévu dans la bague de transmission de force.

2. Dispositif selon la revendication 1, **caractérisé en ce qu'**une pluralité de premiers éléments entraîneurs (17) décalés les uns par rapport aux autres sur le pourtour et une pluralité de deuxièmes éléments entraîneurs (18) décalés les uns par rapport aux autres et par rapport aux premiers éléments entraîneurs sur le pourtour sont prévues, auxquelles est associée une pluralité correspondante d'évidements (19, 20) axiaux dans la bague de transmission de force (10) et la bague glissante (4), sachant que les premiers éléments entraîneurs (17) peuvent être reçus de manière simultanée dans des évidements (20, 21) orientés les uns par rapport aux autres dans la bague de transmission de force et la bague glissante.

3. Dispositif selon l'une quelconque des revendications précédentes, **caractérisé en ce que** chaque premier et chaque deuxième élément entraîneur (17, 18) sont réalisés de manière à présenter une forme cylindrique et sont maintenus par un ajustement serré dans la bague de transmission de force (10) ou dans le composant de montage (1).

4. Dispositif selon l'une quelconque des revendications précédentes, **caractérisé en ce qu'**au moins un élément d'étanchéité (11) annulaire fabriqué en un matériau élastique est prévu sur la bague de transmission de force (10) à proximité de la surface d'extrémité (13) de cette dernière tournée vers la bague glissante (4), sachant que l'élément d'étanchéité peut être amené en prise de manière étanche avec une surface de guidage (14, 15) du composant de montage (1), le long de laquelle la bague de transmission de force est guidée axialement.

5. Dispositif selon l'une quelconque des revendications précédentes, **caractérisé par** un dispositif de précontrainte (9) agissant entre le composant de montage (1) et la bague de transmission de force (10) afin de précontraindre la bague de transmission de force axialement contre la bague glissante (4).

6. Dispositif selon l'une quelconque des revendications précédentes, **caractérisé en ce que** le composant de montage (1) comporte un espace annulaire de guidage (2), dans lequel sont reçues de manière mobile axialement la bague de transmission de force (10) et au moins une zone de la bague glissante (4).

7. Dispositif selon l'une quelconque des revendications précédentes, **caractérisé en ce que** le composant de montage comporte un boîtier stationnaire (1).
